## Europäisches Patentamt
## European Patent Office
## Office européen des brevets

(11) Veröffentlichungsnummer: **0 310 880**
**A1**

# (12) EUROPÄISCHE PATENTANMELDUNG

(21) Anmeldenummer: **88115626.9**

(22) Anmeldetag: **23.09.88**

(51) Int. Cl.⁴: **H04N 9/79**

(30) Priorität: **03.10.87 DE 3733563**

(43) Veröffentlichungstag der Anmeldung:
**12.04.89 Patentblatt 89/15**

(84) Benannte Vertragsstaaten:
**AT DE FR GB IT**

(71) Anmelder: **GRUNDIG E.M.V.**
**Elektro-Mechanische Versuchsanstalt Max**
**Grundig holländ. Stiftung & Co. KG.**
**Kurgartenstrasse 37**
**D-8510 Fürth/Bay.(DE)**

(72) Erfinder: **Schülein, Reinhard c/o Grundig**
**E.M.V. Max Grundig**
**holländ. Stiftung&CoKG Kurgartenstrasse 37**
**D-8510 Fürth/Bay(DE)**
Erfinder: **Welz, Gerhard c/o Grundig E.M.V.**
**Max Grundig**
**holländ. Stiftung&CoKG Kurgartenstrasse 37**
**D-8510 Fürth/Bay(DE)**

(54) **Einrichtung zur Wiedergabe eines auf einem Magnetband eines Videorecorders aufgezeichneten Videosignals.**

(57) Bei bekannten Videorecordern mit einem Bildspeicher erfolgen auf dem Signalweg zwischen den Wiedergabeköpfen und dem Bildschirm mehrmals Umcodierungen des Signals von der zusammengesetzten Form in die Komponentenform und umgekehrt. Dies führt zu einer unerwünschten Beeinträchtigung der Bildqualität. Die neue Einrichtung soll ein Wiedergabesignal hoher Qualität zur Verfügung stellen. Hierzu wird das Ausgangssignal des Bildspeichers (4) als RGB-Signal über die Euro-AV-Buchse (6) des Videorecorders und das Euro-AV-Kabel (7) der Euro-AV-Buchse (8) des Fernsehempfängers zugeführt und von dort aus direkt an die Bildröhre (9) des Fernsehempfängers angelegt.

EP 0 310 880 A1

Xerox Copy Centre

## EINRICHTUNG ZUR WIEDERGABE EINES AUF EINEM MAGNETBAND EINES VIDEORECORDERS AUFGE-ZEICHNETEN VIDEOSIGNALS

Die Erfindung betrifft eine Einrichtung zur Wiedergabe eines auf einem Magnetband eines Videorecorders aufgezeichneten Videosignals mit den im Oberbegriff des Anspruchs 1 angegebenen Merkmalen.

Bei bekannten Einrichtungen zur Wiedergabe eines auf einem Magnetband eines Videorecorders aufgezeichneten Videosignals wird das von den Wiedergabeköpfen gelieferte Videosignal in ein FBAS-Signal umgewandelt und das FBAS-Signal über eine AV-Buchse oder eine Euro-AV-Buchse des Videorecorders an einen Fernsehempfänger weitergeleitet. Im Fernsehempfänger wird das FBAS-Signal in ein RGB-Signal umgewandelt und dieses der Bildröhre des Fernsehempfängers zugeführt.

Weiterhin sind bereits Videorecorder bekannt, die auf der Wiedergabeseite einen Bildspeicher verwenden, beispielsweise zum Zeitfehlerausgleich, zur Rauschreduktion, zur Dropoutkompensation, zur Bild-im-Bild-Darstellung, usw. Da dieser Bildspeicher Komponenten-Signale (RGB oder YUV) als Eingangssignale benötigt, muß das im Videorecorder vorliegende FBAS-Signal in ein Komponenten-Signal umgewandelt werden. Aus dem am Ausgang des Bildspeichers erhaltenen Komponenten-Signal muß dann erneut ein FBAS-Signal gewonnen werden. Dieses FBAS-Signal wird dem Fernsehempfänger über die AV- oder die Euro-AV-Buchse des Videorecorders zugeführt. Im Fernsehempfänger wird das FBAS-Signal in RGB-Signale umgewandelt und diese an die Bildröhre des Fernsehempfängers weitergegeben.

Die beschriebenen Einrichtungen weisen jedoch Nachteile auf. So wird die Bildqualität des auf dem Bildschirm des Fernsehempfängers dargestellten Videosignals durch die mehrmalige Umwandlung von FBAS- in Komponentenform und zurück beeinträchtigt. Insbesondere in bezug auf zukünftige höherauflösende Wiedergabesysteme ergeben sich folglich Probleme, da dort eine schlechte Bildqualität besonders auffällt.

Der Erfindung liegt demzufolge die Aufgabe zugrunde, eine Einrichtung der im Oberbegriff des Anspruchs 1 angegebenen Art derart auszugestalten, daß die durch die mehrmalige Umwandlung von FBAS- in Komponentenform und zurück verursachte Bildqualitätsminderung weitgehend vermieden wird.

Diese Aufgabe wird durch die im kennzeichnenden Teil des Anspruchs 1 angegebenen Merkmale gelöst. Vorteilhafte Weiterbildungen sind in den Unteransprüchen beschrieben.

Die Vorteile der Erfindung ergeben sich aus Ausführungsbeispielen, welche im folgenden anhand der einzigen Figur näher beschrieben werden.

Die Figur zeigt einen über ein Euro-AV-Kabel 7 mit einem Fernsehempfänger FS verbundenen Videorecorder VR. Ein auf einem Magnetband nach dem Colour-Under-Verfahren aufgezeichnetes Farbvideosignal wird von den rotierenden Videoköpfen VK 1 und VK 2 wiedergegeben und einer Schaltung 1 zugeführt, in der eine Wiedergabevorverstärkung und die Kopfumschaltung erfolgt. Anschließend wird in einer Schaltung 2 die Luminanzkomponente des wiedergegebenen Signals frequenzdemoduliert, die Chrominanzkomponente in ihren ursprünglichen Frequenzbereich frequenzrückumgesetzt und ein RGB-Signal erzeugt. Dies wird unter Steuerung durch ein Schreibtaktsignal S, welches in einer Kontrollschaltung 15 aus den wiedergegebenen zeitfehlerbehafteten Synchronsignalen ermittelt wurde, in einen Bildspeicher 4 eingeschrieben und steht an dessen Ausgang zeitfehlerbefreit zur Verfügung. Die zeitfehlerbefreiten RGB-Signale werden über eine Eintastschaltung 5 an die RGB-Anschlüsse der Euro-AV-Buchse 6 des Videorecorders geführt. Die Euro-AV-Buchse 6 des Videorecorders ist über ein Euro-AV-Kabel 7 mit der Euro-AV-Buchse 8 des Fernsehempfängers FS verbunden. An den RGB-Anschlüssen der Euro-AV-Buchse 8 des Fernsehempfängers FS stehen folglich RGB-Signale zur Verfügung, die direkt der Bildröhre 9 zugeführt und damit auf dem Bildschirm des Fernsehempfängers dargestellt werden.

Im Unterschied zu bekannten Schaltungen werden folglich die RGB-Ausgangssignale des Bildspeichers 4 (ohne vorherige Umwandlung in ein FBAS-Signal) über die in neueren Videorecordern zwar vorhandene, aber bisher nicht zu diesem Zweck benutzte Euro-AV-Buchse direkt der Bilhröhre des Fernsehempfängers zugeführt (d.h. auch im Fernsehempfänger erfolgt keine FBAS-RGB-Wandlung). Die in bekannten Videorecordern auftretenden Umcodierungsverluste und die dadurch verursachte Bildqualitätsminderung werden damit bei der beschriebenen Schaltung vermieden.

Im folgenden wird die Funktionsweise der in der Figur gezeigten Einrichtung anhand einiger Anwendungsmöglichkeiten näher erläutert.

Eine erste Anwendungsmöglichkeit besteht in der normalen Wiedergabe eines nach dem Colour-Under-Verfahren aufgezeichneten Farbvideosignals. Der Signalverlauf bei dieser normalen Wiedergabe wurde bereits oben beschrieben. Ergänzend wird lediglich darauf hingewiesen, daß bei der normalen Wiedergabe die Eintastschaltung 5 die RGB-Ausgangssignale des Bildspeichers 4 unverändert
durchläßt.

Eine zweite Anwendungsmöglichkeit besteht in
der Wiedergabe eines nach dem Colour-Under-
Verfahren aufgezeichneten Farbvideosignals und
der Einblendung eines Fernsehtextsignals, welches
aus einem am Eingang 10 oder am Eingang 17 des
Videorecorders anliegenden weiteren Videosignal
gewonnen wird. Das am Eingang 10 des Videorecorders anliegende weitere Videosignal, welches
entweder von der Hausantenne oder einer Kabelübertragungsstrecke geliefert wird, wird über einen
Tuner 11, eine ZF-Stufe 12 und einen von einem
Fernbediensignal FB gesteuerten Schalter 13 als
FBAS-Signal einem Fernsehtextdecoder 14 des Videorecorders VR zugeführt.

Ein dem Videorecorder über seinen Eingang
17 zugeführtes Videosignal kann von einem mit
dem Videorecorder verbundenen Satelliten-Empfänger stammen.

Im Fernsehtextdecoder 14 werden in grundsätzlich bekannter Weise die Fernsehtextsignale
aus dem FBAS-Signal abgetrennt und in RGB-
Signale umgewandelt. Ferner werden im Fernsehtextdecoder 14 die Synchronimpulse aus dem
FBAS-Signal abgetrennt und zur Erzeugung eines
Tastsignals T verwendet, welches die Eintastschaltung 5 zur Eintastung der vom Fernsehtextdecoder
14 erzeugten RGB-Signale in die am Ausgang des
Bildspeichers 4 zur Verfügung stehende RGB-
Signale steuert. Die im Fernsehtextdecoder 14 gewonnenen Synchronsignale werden ferner der Kontrollschaltung 15 zugeführt und weiterhin zur Regelung des Kopfservos des Videorecorders verwendet. Die Kontrollschaltung 15 steuert die Auslesevorgänge aus dem Bildspeicher 4. Dadurch ist die
notwendige zeitliche Verkoppelung zwischen dem
eingeblendeten Fernsehtextsignal und dem vom
Magnetband wiedergegebenen Videosignal sichergestellt.

Alternativ zu der oben genannten Möglichkeit
kann das Tastsignal T auch in der Kontrollschaltung 15 gewonnen und von dort aus der Eintastschaltung 5 zugeführt werden.

Eine dritte Anwendungsmöglichkeit besteht in
der Wiedergabe eines nach dem Colour-Under-
Verfahren aufgezeichneten Farbvideosignals und
der Einblendung eines Fernsehtextsignals, welches
ebenfalls auf dem Magnetband aufgezeichnet ist.

Eine Schaltung zur Aufzeichnung eines Fernsehtextsignals zusammen mit dem Farbvideosignal
ist beispielsweise in der europäischen Patentanmeldung 0 159 871 beschrieben. Um das vergleichsweise breitbandige Fernsehtextsignal aufzeichnen zu können, wird die Bandbreite des Luminanzkanals für die Dauer der Zeilen der Vertikalaustastlücke, in denen das Fernsehtextsignal übertragen wird, auf eine höhere Durchlaßbandbreite
umgeschaltet und die Bandbreite des Chrominanzkanals entsprechend verringert oder der Chrominanzkanal ganz gesperrt.

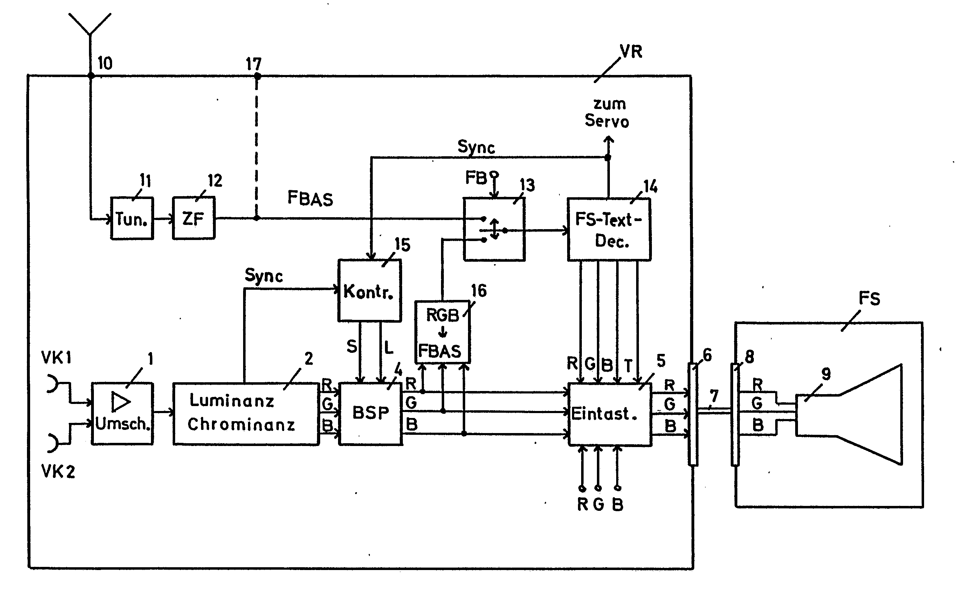

Eine Schaltung zur Wiedergabe eines derartig
aufgezeichneten Signals ist in der Fig.2 B der
genannten europäischen Patentanmeldung 0 159
871 beschrieben. Die dort gezeigte Schaltung
könnte beispielsweise bei der dritten Anwendungsmöglichkeit der Erfindung den Schaltungsblock 2
der Figur ersetzen. Am Ausgang dieser Schaltung
2 liegt dann ein FBAS-Signal an, in dessen Vertikalaustastlücken ein digitales Fernsehtextsignal
vorliegt. Dieses Signal wird in ein RGB-Signal umgewandelt, unter Steuerung der wiedergegebenen
zeitfehlerbehafteten Horizontalsynchronsignale, welche zur Erzeugung des Schreibtaktes S der Kontrollschaltung 15 zugeführt werden, in den Bildspeicher 4 eingeschrieben und liegt am Ausgang des
Bildspeichers 4 zeitfehlerbefreit vor.

Die am Ausgang des Bildspeichers 4 zur Verfügung stehenden, zeitfehlerbefreiten RGB-Signale
werden einerseits der Eintastschaltung 5 und andererseits einer Schaltung 16 zugeführt, in der die
RGB-Signale in ein FBAS-Signal umgewandelt werden. Dieses FBAS-Signal wird über den von der
Fernbedienung gesteuerten Schalter 13 dem Fernsehtextdecoder 14 zugeführt. Dort werden die
Fernsehtextsignale aus dem FBAS-Signal abgetrennt und in RGB-Signale umgewandelt. Die weitere Verarbeitung des Fernsehtextsignals erfolgt
dann ebenso wie es oben im Zusammenhang mit
der zweiten Anwendungsmöglichkeit beschrieben
wurde.

Eine vorteilhafte Weiterbildung der Erfindung
besteht darin, der Eintastschaltung 5 weitere RGB-
Eingänge zuzuordnen. Über diese weiteren RGB-
Eingänge könnten dann weitere Signale auf dem
Bildschirm des Fernsehempfängers FS dargestellt
werden, wie z.B. die Signale eines Personal-Computers oder die Ausgangssignale einer in vielen
heutigen Videorecordern vorhandenen DOS-Schaltung ("Display-on-Screen").

Vorstehend wurden Ausführungsformen beschrieben, bei denen dem Bildspeicher 4, der Eintastschaltung 5 und der Schaltung 16 Komponentensignale in Form von RGB-Signalen zugeführt
werden. Alternativ hierzu ist es ebenfalls möglich,
dem Bildspeicher 4, der Eintastschaltung 5 und der
Schaltung 16 Komponentensignale in Form von
YUV-Signalen zuzuführen. In diesem Fall müßte die
Eintastschaltung 5 eine Schaltung enthalten, die die
YUV-Signale in RGB-Signale umwandelt.

## Ansprüche

1. Einrichtung zur Wiedergabe eines auf einem Magnetband eines Videorecorders aufgezeichneten Videosignals, bei der
- das von den Wiedergabeköpfen gelieferte Videosignal in ein Komponentensignal umgesetzt,
- das Komponentensignal einem Bildspeicher zugeführt, und
- das Ausgangssignal des Bildspeichers über einen Ausgang des Videorecorders der Bildröhre eines Fernsehempfänger zugeführt wird,
dadurch gekennzeichnet, daß das Ausgangssignal des Bildspeichers (4) als RGB-Signal an der Euro-AV-Buchse (6) des Videorecorders (VR) zur Verfügung gestellt, als RGB-Signal über ein Euro-AV-Kabel (7) zur Euro-AV-Buchse (8) des Fernsehempfängers (FS) übertragen und von dort aus unmittelbar an die Bildröhre (9) angelegt wird.

2. Einrichtung nach Anspruch 1, dadurch gekennzeichnet, daß sie weiterhin einen Fernsehtextdecoder (14) enthält, der an seinem Ausgang ein RGB-Signal liefert, welches in einer Eintastschaltung (5) in das Ausgangssignal des Bildspeichers (4) eingetastet wird.

3. Einrichtung nach Anspruch 2, dadurch gekennzeichnet, daß dem Fernsehtextdecoder (14) ein vom Antenneneingang (10) des Videorecorders (VR) abgeleitetes FBAS-Signal zugeführt wird.

4. Einrichtung nach Anspruch 2, dadurch gekennzeichnet, daß dem Fernsehtextdecoder (14) ein vom Magnetband wiedergegebenes, zeitfehlerbefreites FBAS-Signal zugeführt wird.

5. Einrichtung nach einem oder mehreren der vorhergehenden Ansprüche, dadurch gekennzeichnet, daß die Einschreib- und Auslesevorgänge des Bildspeichers (4) von einer Kontrollschaltung (15) gesteuert werden, der die im Fernsehtextdecoder (14) aus dem FBAS-Signal gewonnenen und die vom Band wiedergegebenen, zeitfehlerbehafteten Synchronimpulse zugeführt werden.

6. Einrichtung nach einem oder mehreren der vorhergehenden Ansprüche, dadurch gekennzeichnet, daß die Kontrollschaltung (15) der Eintastschaltung (5) ein Eintaststeuersignal zuführt.

7. Einrichtung nach einem oder mehreren der vorhergehenden Ansprüche, dadurch gekennzeichnet, daß der Kopfservo-Regelkreis des Videorecorders (VR) von einem vom Fernsehtextdecoder (14) abgeleiteten Steuersignal geregelt wird.

8. Einrichtung nach einem oder mehreren der vorhergehenden Ansprüche, dadurch gekennzeichnet, daß die Eintastschaltung weitere Eingänge für ein Komponenten-Signal besitzt.

9. Einrichtung nach einem oder mehreren der vorhergehenden Ansprüche, dadurch gekennzeichnet, daß das Komponentensignal ein RGB-Signal ist.

10. Einrichtung nach einem oder mehreren der Ansprüche 1 bis 8, dadurch gekennzeichnet, daß das Komponentensignal ein YUV-Signal ist.

## EINSCHLÄGIGE DOKUMENTE

EP 88115626.9

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | DE - A1 - 3 417 276 (GRUNDIG)<br><br>* Zusammenfassung; Ansprüche; Fig. 3; Seite 13, Zeilen 8-25 *<br><br>-- | 1-4,9 | H 04 N 9/79 |
| Y | DE - A1 - 3 533 703 (BOSCH)<br><br>* Zusammenfassung *<br><br>-- | 1-4,9 | |
| A | DE - A1 - 3 104 843 (LICENTIA)<br><br>* Ansprüche 1,2,4,7; Fig. 1,2; Seite 7, Zeilen 3-25 *<br><br>-- | 1 | |
| A | FUNKSCHAU, Nr. 26, 1986, München<br>HELMUT MITSCHKE "Bild im Bild"<br>Seiten 26-31<br><br>* Fig. 1; Seite 26 *<br><br>-- | 1 | RECHERCHIERTE SACHGEBIETE (Int. Cl.4) |
| A | US - A - 4 644 387 (BELL)<br><br>* Zusammenfassung; Fig. *<br><br>---- | 1 | H 04 N 9/00<br>H 04 N 5/00<br>H 04 B 1/00 |

Der vorliegende Recherchenbericht wurde für alle Patentansprüche erstellt.

| Recherchenort | Abschlußdatum der Recherche | Prüfer |
|---|---|---|
| WIEN | 02-01-1989 | DIMITROW |

KATEGORIE DER GENANNTEN DOKUMENTEN
X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder
    nach dem Anmeldedatum veröffentlicht worden ist
D : in der Anmeldung angeführtes Dokument
L : aus andern Gründen angeführtes Dokument

& : Mitglied der gleichen Patentfamilie, überein-
    stimmendes Dokument

EPA Form 1503. 03.82